# EUROPÄISCHE PATENTSCHRIFT

(11) **EP 3 158 260 B1**
(45) Veröffentlichungstag und Bekanntmachung des Hinweises auf die Patenterteilung: **17.02.2021**
(21) Anmeldenummer: 15723250.5
(22) Anmeldetag: 21.05.2015
(51) Int. Cl.: F21V 8/00

(54) **KRAFTFAHRZEUGBELEUCHTUNGSEINRICHTUNG**
MOTOR VEHICLE LIGHTING DEVICE
DISPOSITIF D'ÉCLAIRAGE DE VÉHICULE AUTOMOBILE

(30) Priorität: 23.06.2014 DE 102014211963
(43) Veröffentlichungstag der Anmeldung: 26.04.2017
(73) Patentinhaber: Volkswagen Aktiengesellschaft, 38440 Wolfsburg (DE)
(72) Erfinder: GEYER, Christoph, 38547 Wettmershagen (DE)
(86) Internationale Anmeldenummer: PCT/EP2015/061206
(87) Internationale Veröffentlichungsnummer: WO 2015/197271

(56) Entgegenhaltungen:
- WO-A2-2013/166535
- US-A- 5 883 994
- US-A- 5 915 060

## Beschreibung

Die Erfindung betrifft eine Kraftfahrzeugbeleuchtungseinrichtung gemäß dem Oberbegriff von Patentanspruch 1.

Eine erste Kraftfahrzeugbeleuchtungseinrichtung ist aus der 10 2009 058 457 A1 bekannt geworden. Die bekannte Kraftfahrzeugbeleuchtungseinrichtung kann sowohl die Funktion eines Blinklichts (Fahrtrichtungsanzeigers) als auch die Funktion eines Tagfahrlichts wahrnehmen. Aufgrund der Ausgestaltung der Lichtleiter sowie der Anordnung der diesen zugeordneten Lichtquellen ist eine visuelle Gewichtung der genannten Lichtfunktionen über die Größe der jeweils erzeugten Leuchtfläche möglich.

Konkret wird dies dadurch erreicht, dass das Licht über zwei Lichtleiterzweige eingekoppelt wird, zwischen denen ein Lichtauskoppelelemente aufweisender Lichtleiterabschnitt liegt. In diesem Lichtleiterabschnitt steht daher nur Licht einer Lichtquelle zur Verfügung, während zu einem zweiten, ebenfalls Lichtauskoppelelemente aufweisenden Lichtleiterabschnitt das Licht aller Lichtquellen zur Verfügung gestellt werden kann.

Konstruktionsbedingt weist die beschriebene Kraftfahrzeugbeleuchtungseinrichtung eine langgestreckte, gebogene Form auf. Dies führt zu einem vergleichsweise hohen Platzbedarf.

Des Weiteren ist in der US 5 915 060 A eine Lichtleiteranordnung beschrieben, welche eine Mehrzahl von länglichen Lichtleitern umfasst, die durch rippenartige Elemente miteinander verbunden sind. Jeder der Lichtleiter weist eine Längsachse, eine Lichteinkoppelfläche und eine Lichtaustrittsfläche auf. Konkret soll das Licht von in einem Gehäuse (bspw. Festplatten-Laufwerk) befindlichen einzelnen Status-LEDs oder einer Gruppe solcher Status LEDs extern besser sichtbar gemacht werden. Dabei soll eine gegenseitige optische "Kontaminierung" vermieden werden, damit nur die Status-LEDs aufleuchten, deren Aufleuchten auch tatsächlich beabsichtigt ist. Dazu stehen die Lichtleiter mit ihrer Längserstreckung daher jeweils in einem Winkel von möglichst 90 Grad zur Längserstreckung der rippenartigen Elemente.

Der vorliegenden Erfindung liegt die Aufgabe zu Grunde, eine Kraftfahrzeugbeleuchtungseinrichtung der genannten Art derart weiterzubilden, so dass diese kompakt gehalten werden kann.

Diese Aufgabe wird mit den Merkmalen von Patentanspruch 1 gelöst. Vorteilhafte Ausführungen beziehungsweise Weiterbildungen der Erfindung sind den jeweiligen Unteransprüchen entnehmbar.

Die Erfindung geht dabei aus von einer Kraftfahrzeugbeleuchtungseinrichtung mit den Merkmalen vom Oberbegriff von Patentanspruch 1. Eine solche Kraftfahrzeugbeleuchtungseinrichtung weist wenigstens einen ersten Lichtleiter mit wenigstens einer Lichteinkoppelfläche und wenigstens einer dieser Lichteinkoppelfläche zugeordneten Lichtaustrittsfläche auf. Es ist wenigstens ein zweiter Lichtleiter mit wenigstens einer Lichteinkoppelfläche und wenigstens einer dieser Lichteinkoppelfläche zugeordneten Lichtaustrittsfläche vorhanden. Dem ersten Lichtleiter ist wenigstens eine erste Lichtquelle zur Einspeisung von Licht (vorzugsweise einer ersten Farbe) und dem zweiten Lichtleiter ist wenigstens eine zweite Lichtquelle zur Einspeisung von Licht (vorzugsweise einer zweiten Farbe) zugeordnet. Die Lichtleiter sind optisch derart miteinander gekoppelt, dass das Licht der zweiten Lichtquelle zumindest teilweise zur Lichtaustrittsfläche des ersten Lichtleiters gelangen kann, nicht jedoch das Licht der ersten Lichtquelle zur Lichtaustrittsfläche des zweiten Lichtleiters.

Es wird auch vorgeschlagen, dass die Lichteinkoppelflächen jeweils derart zu den Lichtaustrittsflächen angeordnet sind, dass eine gedachte Flächennormale auf einer Lichteinkoppelfläche in die dieser Lichteinkoppelfläche zugeordneten Lichtaustrittsfläche fällt.

Aufgrund der erfindungsgemäßen Merkmale ist ein sehr kompakter Aufbau der Kraftfahrzeugbeleuchtungseinrichtung möglich. Die erfindungsgemäße Kraftfahrzeugbeleuchtungseinrichtung eignet sich daher sehr gut für die Verwendung in Scheinwerfer- oder Rückleuchtenmodulen, in denen in der Regel nur äußerst wenig Platz zur Verfügung steht.

Gemäß weiterer Merkmale der Erfindung ist zwischen den Lichtleitern wenigstens ein optisches Element angeordnet, durch welches Licht von einem Lichtleiter in den anderen Lichtleiter übertragen werden kann.

Über die Anordnung und Ausgestaltung des optischen Elementes kann dabei eine gewünschte Lichtverteilung zwischen den Lichtleitern beeinflusst werden.

Es wird ferner vorgeschlagen, das optische Element als rippenartiges, lichtleitendes Element auszubilden, welches schräg, also in einem Winkel zu den Lichteinkoppelflächen verläuft. Über die Wahl des Winkels kann sehr gut der Anteil desjenigen Lichts eingestellt werden, welcher von einem Lichtleiter in den anderen gelangt.

In einer Weiterbildung der Erfindung können die Lichtleiter über das optische Element einstückig verbunden sein. Hierdurch können Fertigung und Montage der Kraftfahrzeugbeleuchtungseinrichtung vereinfacht werden.

Gemäß der Erfindung ist der erste Lichtleiter, in einer Draufsicht auf die Kraftfahrzeugbeleuchtungseinrichtung gesehen, derart ausgebildet, dass er einen Bereich zumindest teilweise umrandet, wobei der zweite Lichtleiter außerhalb des Bereichs angeordnet ist.

Hierdurch wird zum einen ein kompakter Aufbau der Kraftfahrzeugbeleuchtungseinrichtung begünstigt, zum anderen kann hierdurch ihre optische Wirkung verbessert werden.

Es ist in einer anderen Ausbildung des Erfindungsgedankens äußerst zweckmäßig, wenn der erste Lichtleiter als länglicher Körper ausgebildet ist, der in einer Draufsicht auf die Kraftfahrzeugbeleuchtungseinrichtung den Bereich allseitig umrandet, wobei, in Längsrichtung des ersten Lichtleiters gesehen, die Lichtaustrittsfläche des zweiten Lichtleiters zur Lichtaustrittsfläche des ersten Lichtleiters in einem Abstand zurückversetzt ist.

Auf diese Weise kann ein besonderer 3D-Effekt im Erscheinungsbild der Kraftfahrzeugbeleuchtungseinrichtung realisiert werden, verbunden mit einem hohen Wiedererkennungswert.

In weiterer Ausgestaltung der Erfindung kann das rippenartige Verbindungselement, ausgehend vom ersten Lichtleiter, in Richtung der Lichteinkoppelfläche des ersten Lichtleiters geneigt sein.

Hierdurch können die durch die zweite Lichtquelle generierten Lichtstrahlen teilweise in den ersten Lichtleiter mit eingekoppelt und an dessen Lichtaustrittsfläche wieder ausgekoppelt werden. Insbesondere im Fall einer Ausbildung des ersten Lichtleiters als länglicher Körper kann dann bei gleichzeitiger Aktivierung der ersten und der zweiten Lichtquelle ein sehr interessantes Erscheinungsbild generiert werden.

Vorzugsweise dienen die erste Lichtquelle zur Erzeugung eines Tagfahrlichts und die zweite Lichtquelle zur Erzeugung eines Blinklichts. Somit kann die Kraftfahrzeugbeleuchtungseinrichtung als kompakte Tagfahrlicht/Blinklicht-Einheit am Kraftfahrzeug verbaut werden.
Es ist denkbar, dass die erste Lichtquelle weißes und die zweite Lichtquelle gelbes oder orangenes Licht erzeugt. Die gewünschte Lichtfarbe kann aber auch durch das Vorschalten eines entsprechenden Farbfilters erzielt werden.

Davon abweichend sind jedoch auch andere Kombinationen von Lichtfunktionen denkbar. Wird die Kraftfahrzeugbeleuchtungseinrichtung im Heckbereich eingesetzt, so sind beispielsweise die Kombinationen Schlusslicht/Blinklicht, Schlusslicht/Bremslicht oder Nebelschlusslicht/Rückfahrlicht usw. denkbar.
Bei Einsatz der Kraftfahrzeugbeleuchtungseinrichtung im Frontbereich ist zum Beispiel auch die Kombinationen Fernlicht/Tagfahrlicht möglich.

Die Kraftfahrzeugbeleuchtungseinrichtung kann alle wesentlichen Lichtfunktionen auf sehr kompakte Art und Weise bereitstellen, da in einer Draufsicht auf die Kraftfahrzeugbeleuchtungseinrichtung innerhalb des Bereichs, welcher von dem ersten Lichtleiter zumindest teilweise umrandet wird, wenigstens eine weitere Lichtquelle zur Erzeugung eines Abblend- und/oder eines Fernlichts angeordnet ist.

Alle Lichtquellen der Kraftfahrzeugbeleuchtungseinrichtung sind vorzugsweise als LEDs (lichtemittierende Dioden) ausgebildet.

Der optische Wirkungsgrad der Kraftfahrzeugbeleuchtungseinrichtung lässt sich weiterhin dadurch verbessern, wenn die Lichteinkoppelflächen mit einer die Lichtstrahlen kollimierenden, also parallelisierenden Optik und die Lichtaustrittsflächen mit einer die Lichtstrahlen streuenden Optik versehen sind.

Unter Schutz gestellt werden soll mit dieser Erfindung auch ein Kraftfahrzeug, welches mit wenigstens einer erfindungsgemäßen Kraftfahrzeugbeleuchtungseinrichtung ausgestattet ist. Bevorzugte Ausführungsbeispiele der Erfindung sind in den Zeichnungen dargestellt und werden in der nachfolgenden Beschreibung näher erläutert. Dabei beziehen sich gleiche Bezugszeichen auf gleiche, vergleichbare oder funktional gleiche Bauteile, wobei entsprechende oder vergleichbare Eigenschaften und Vorteile erreicht werden, auch wenn eine wiederholte Beschreibung weggelassen ist.

Es zeigen, jeweils schematisch
- Fig. 1: ein erstes Ausführungsbeispiel einer erfindungsgemäßen Kraftfahrzeugbeleuchtungseinrichtung, in einer Draufsicht,
- Fig. 2: einen Längsschnitt gemäß Schnittverlauf II aus Fig. 1,
- Fig. 3: ein Kraftfahrzeug-Beleuchtungsmodul mit mehreren erfindungsgemäßen, nebeneinander angeordneten Kraftfahrzeugbeleuchtungseinrichtungen,
- Fig. 4: ein Kraftfahrzeug mit zwei Kraftfahrzeug-Beleuchtungsmodulen gemäß Fig. 3
- Fig. 5: einen Längsschnitt durch ein weiteres Ausführungsbeispiel einer erfindungsgemäßen Kraftfahrzeugbeleuchtungseinrichtung, vergleichbar mit der Schnittansicht aus Fig. 2, jedoch nur teilweise dargestellt und
- Fig. 6: eine Draufsicht auf noch ein weiteres Ausführungsbeispiel einer erfindungsgemäßen Kraftfahrzeugbeleuchtungseinrichtung in einer Draufsicht, vergleichbar mit der Ansicht aus Fig. 1.

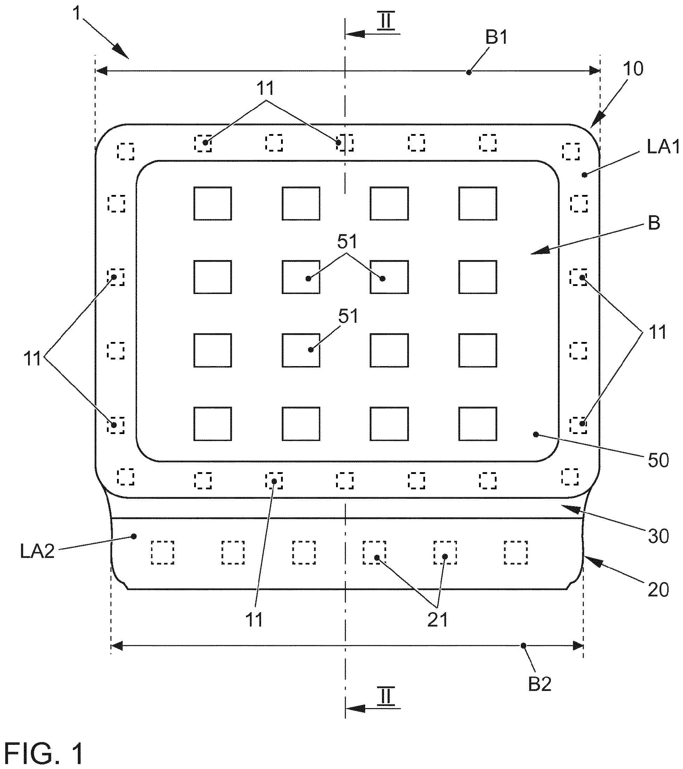

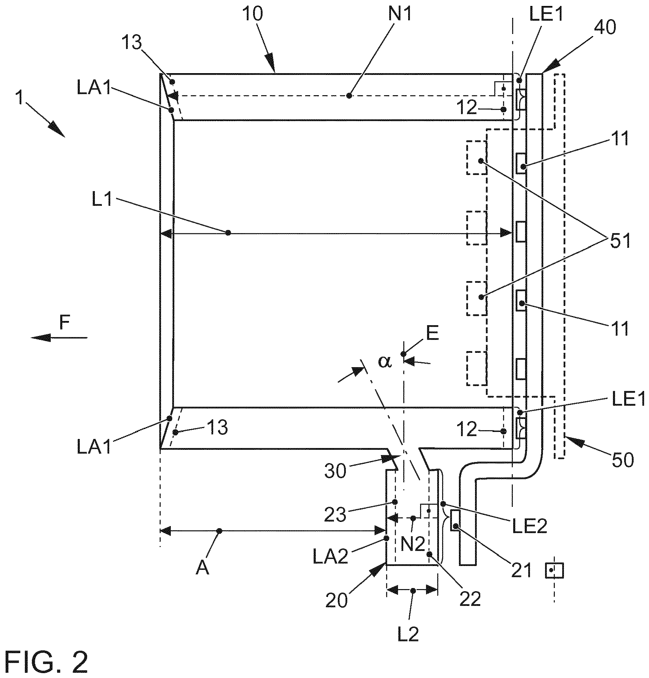

Zunächst wird auf die Fig. 1 und 2 Bezug genommen.

Darin ist eine Kraftfahrzeugbeleuchtungseinrichtung 1 ersichtlich mit einem ersten Lichtleiter 10 und einem zweiten Lichtleiter 20. Der erste Lichtleiter 10 weist eine Lichteinkoppelfläche LE1 und eine Lichtaustrittsfläche LA1 auf. Dem zweiten Lichtleiter 20 sind eine Lichteinkoppelfläche LE2 und eine Lichtaustrittsfläche LA2 zugeordnet. In die Lichtleiter 10,20 eingekoppeltes Licht gelangt unter Totalreflexion zu den jeweiligen Lichtaustrittsflächen LA1, LA2.

Ferner ist angedeutet, dass die Lichtleiter 10, 20 jeweils mit einer die Lichtstrahlen kollimierenden Eingangsoptik 12, 22 und mit einer die Lichtstrahlen streuenden Ausgangsoptik 13, 23 versehen sind. Die Eingangsoptik kann beispielsweise eine Fresneloptik sein.

In die Lichteinkoppelfläche LE1 wird Licht von LEDs 11 und in die Lichteinkoppelfläche LE2 Licht von LEDs 21 eingekoppelt. Die LEDs 11 sind auf einer Halterung 40 montiert und senden weißes Licht zur Erzeugung von Tagfahrlicht aus. Die LEDs 21 sind ebenfalls auf der Halterung 40 befestigt und senden gelbes oder orangenes Licht zur Erzeugung eines Fahrtrichtungsanzeigers (Blinklicht) aus.

Der erste Lichtleiter 10 ist als länglicher Körper ausgebildet mit einer Länge L1, die mehrere Zentimeter betragen kann. Der zweite Lichtleiter 20 weist eine Länge L2 auf, welche wesentlich geringer als die Länge L1 ausfällt. Er ist über ein rippenartiges Verbindungselement 30 einstückig mit dem ersten Lichtleiter 10 verbunden. Dabei ist, in Längsrichtung L1 des ersten Lichtleiters 10 gesehen, die Lichtaustrittsfläche LA2 des zweiten Lichtleiters 20 zur Lichtaustrittsfläche LA1 des ersten Lichtleiters 10 in einem Abstand A zurückversetzt.

Die Lichteinkoppelflächen LE1 und LE2 sind zu den Lichtaustrittsflächen LA1 und LA2 so angeordnet, dass jeweils eine gedachte Flächennormale N1, N2 auf einer Lichteinkoppelfläche LE1, LE2 in die dieser Lichteinkoppelfläche zugeordneten Lichtaustrittsfläche LA1, LA2 fällt. Die Lichteinkoppelflächen LE1 und LE2 sind im wesentlichen parallel zueinander.

Des Weiteren ist eine gedachte Ebene E eingezeichnet, welche ebenfalls parallel zu den Lichteinkoppelflächen LE1 und LE2 verläuft. Zu dieser Ebene E ist das rippenartige Verbindungselement 30 in einem Winkel α geneigt. Der Winkel α wird vorzugsweise in der Größe von etwa 5° bis etwa 80° gewählt. Das rippenartige Verbindungselement 30 ist daher, ausgehend vom ersten Lichtleiter 10, in Richtung der Lichteinkoppelfläche LE1 des ersten Lichtleiters 10 geneigt.

In die Lichteinkoppelfläche LE2 eingekoppeltes Licht der LEDs 21 wird zum großen Teil unter Totalreflexion zur Lichtaustrittsfläche LA2 geleitet. Ein gewisser Anteil des Lichts gelangt jedoch auch in das rippenartige Verbindungsteil 30 hinein und wird aufgrund der Unterschreitung eines bestimmten, materialbedingten Grenzwinkels der Totalreflexion weiter in den Lichtleiter 10 und dort bis zur Lichtaustrittsfläche LA1 geleitet.

Demgegenüber wird in die Lichteinkoppelfläche LE1 eingekoppeltes Licht der LEDs 11 ausschließlich zur Lichtaustrittsfläche LA1 geleitet. Lichtstrahlen, die in das rippenartige Verbindungselement 30 gelangen, werden aufgrund einer Überschreitung des besagten Grenzwinkels bereits aus dem rippenartigen Verbindungselement 30 ausgekoppelt, bevor sie überhaupt zur Lichtaustrittsfläche LA2 gelangen können.

Über die Größe des Winkels α kann derjenige Anteil des in den Lichtleiter 20 eingekoppelten Lichts variiert werden, der über das rippenartige Verbindungsteil 30 in den Lichtleiter 10 und damit zur Lichtaustrittsfläche LA1 gelangt.

In einer Draufsicht auf die Kraftfahrzeugbeleuchtungseinrichtung 1 (vgl. Fig. 1) entgegen einer (im Montagezustand) üblichen Fahrtrichtung F wird durch den Lichtleiter 10 ein Bereich B allseitig umrandet, also umrahmt.

In dieser Ansicht weisen der erste Lichtleiter 10 eine Breite B1 und der zweite Lichtleiter 20 eine Breite B2 auf. Die Breite B2 ist nur geringfügig kleiner als die Breite B1.

Es ist erkennbar, dass innerhalb des Bereiches B weitere LEDs 51 matrixartig angeordnet sind, deren Licht zur Erzeugung eines Abblend- und/oder Fernlichts dient. Die LEDs 51 sind auf einer Halterung 50 bzw. auf einer Platine montiert.

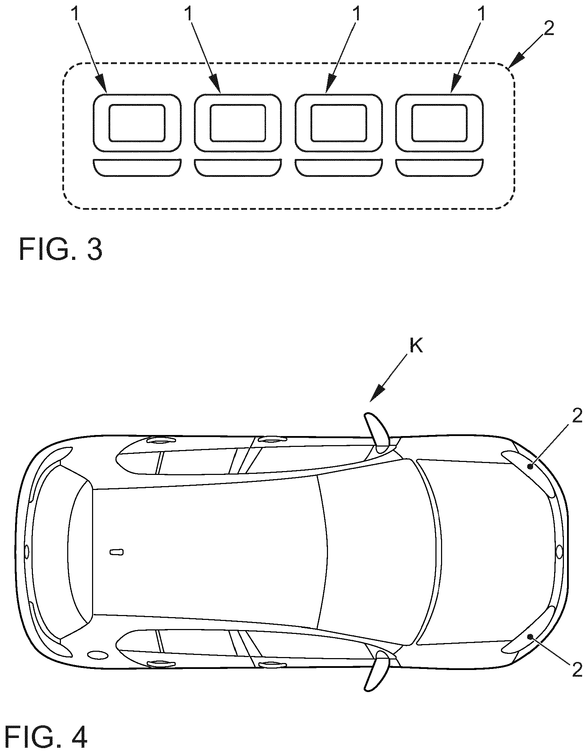

In Fig. 3 ist in einer Draufsicht ein Kraftfahrzeug-Beleuchtungsmodul 2 dargestellt, welches vier nebeneinander angeordnete Kraftfahrzeugbeleuchtungseinrichtungen 1 enthält.

Ein solches Kraftfahrzeug-Beleuchtungsmodul 2 kann beispielsweise als Scheinwerfer in einem Kraftfahrzeug K verbaut werden und weist bei kompaktem Aufbau eine hohe Funktionsdichte (Abblend-, Fern-, Blink- und Tagfahrlicht) auf (vgl. Fig. 4).

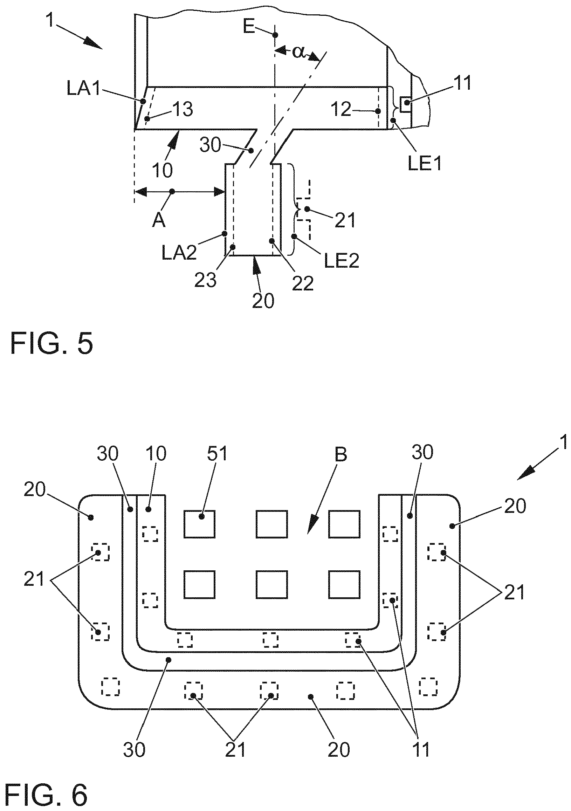

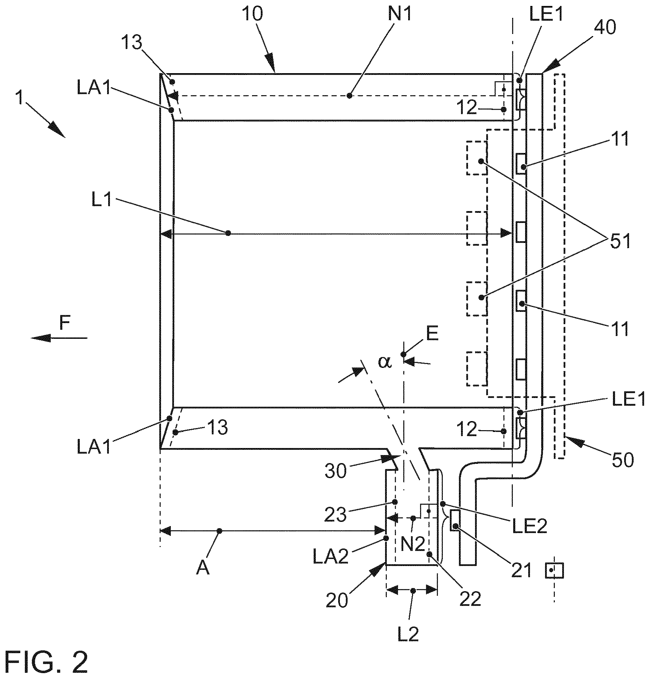

Fig. 5 zeigt ein weiteres Ausführungsbeispiel für eine erfindungsgemäße Kraftfahrzeugbeleuchtungseinrichtung 1. Im Gegensatz zum Ausführungsbeispiel gemäß Fig. 2 ist bei diesem Ausführungsbeispiel das rippenartige Verbindungselement 30 derart in einem Winkel α zur Ebene E geneigt, dass das rippenartige Verbindungselement 30, ausgehend vom ersten Lichtleiter 10, in Richtung der Lichtaustrittsfläche LA1 des ersten Lichtleiters 10 geneigt ist. Bei diesem Ausführungsbeispiel kann daher im Umkehrschluss zum Ausführungsbeispiel gemäß Fig. 2 über die LEDs 11 in den Lichtleiter 10 eingekoppeltes Licht sowohl zur

Lichtaustrittsfläche LA1 als auch zur Lichtaustrittsfläche LA2 gelangen. Demgegenüber kann über die LEDs 21 in den Lichtleiter 20 eingekoppeltes Licht lediglich zur Lichtaustrittsfläche LA2 gelangen.
Bei diesem Ausführungsbeispiel dient die Größe des Winkels α zur Änderung desjenigen Anteils des in den Lichtleiter 10 eingekoppelten Lichts, der über das rippenartige Verbindungsteil 30 in den Lichtleiter 20 und damit zur Lichtaustrittsfläche LA2 gelangt

Schließlich ist in Fig. 6 noch ein weiteres Ausführungsbeispiel einer erfindungsgemäßen Kraftfahrzeugbeleuchtungseinrichtung 1 ersichtlich, bei dem der erste Lichtleiter 10 U- oder C-förmig ausgebildet ist und einen Bereich B an drei Seiten umrandet. Außerhalb des Bereichs B bzw. außerhalb des Lichtleiters 10 ist wiederum ein zweiter, ebenfalls U- oder C-förmiger Lichtleiter 20 über ein rippenförmiges Verbindungselement 30 einstückig am ersten Lichtleiter 10 angeformt.

Abweichend von den Ausführungsbeispielen ist es auch denkbar, dass das rippenartige Verbindungselement 30 nicht einstückig mit den Lichtleitern 10 und 20 verbunden, sondern kontaktlos zwischen diesen angeordnet ist (nicht dargestellt). Das Element 30 kann dann ebenso die Funktion einer optischen Kopplung zwischen den Lichtleitern 10 und 20 erfüllen, wobei die Fertigung des Lichtleiters 10 unabhängig von der Wahl des Winkels α gehalten werden kann. Dies kann einem Gleichteilekonzept zuträglich sein. Es ist auch denkbar, mehrere Elemente 30 mit jeweils reduzierter Breite (vgl. B2 in Fig. 1) vorzusehen.

Die Erfindung ist nicht auf das bzw. die obigen Ausführungsbeispiele beschränkt. Diese wurden nur zur allgemeinen Erläuterung des Kerngedankens der Erfindung herangezogen. Die Erfindung kann im Rahmen ihres Schutzumfangs vielmehr auch andere als die zuvor beschriebenen Ausführungsbeispiele bzw. Ausprägungen annehmen. Hierbei kann sie insbesondere auch solche Merkmale aufweisen, die eine Kombination aus Einzelmerkmalen der jeweiligen Ansprüche darstellen.

### Bezugszeichenliste

- 1: Kraftfahrzeugbeleuchtungseinrichtung
- 2: Kraftfahrzeug-Beleuchtungsmodul
- 10: erster Lichtleiter
- 11: LEDs zur Erzeugung von Tagfahrlicht
- 12: kollimierende Eingangsoptik
- 13: streuende Ausgangsoptik
- 20: zweiter Lichtleiter
- 21: LEDs zur Erzeugung von Blinklicht
- 22: kollimierende Eingangsoptik
- 23: streuende Ausgangsoptik
- 30: rippenartiges Verbindungselement
- 40: Halterung
- 50: Halterung
- 51: LEDs zur Erzeugung von Abblend-/Fernlicht
- α: Winkel
- A: Abstand
- B: vom ersten Lichtleiter umrandeter Bereich
- B1: Breite des ersten Lichtleiters
- B2: Breite des zweiten Lichtleiters
- E: gedachte Ebene
- F: Fahrtrichtung
- K: Kraftfahrzeug
- L1: Länge des ersten Lichtleiters
- L2: Länge des zweiten Lichtleiters
- LE1: Lichteinkoppelfläche des ersten Lichtleiters
- LE2: Lichteinkoppelfläche des zweiten Lichtleiters
- LA1: Lichtaustrittsfläche des ersten Lichtleiters
- LA2: Lichtaustrittsfläche des zweiten Lichtleiters
- N1: eine Flächennormale zur Lichteintrittsfläche des ersten Lichtleiters
- N2: eine Flächennormale zur Lichteintrittsfläche des zweiten Lichtleiters

## Patentansprüche

1. Kraftfahrzeugbeleuchtungseinrichtung (1), die wenigstens einen ersten Lichtleiter (10) mit wenigstens einer Lichteinkoppelfläche (LE1) und wenigstens einer dieser zugeordneten Lichtaustrittsfläche (LA1) aufweist und wenigstens einen zweiten Lichtleiter (20) mit wenigstens einer Lichteinkoppelfläche (LE2) und wenigstens einer dieser zugeordneten Lichtaustrittsfläche (LA2), wobei dem ersten Lichtleiter (10) wenigstens eine erste Lichtquelle (11) der Kraftfahrzeugbeleuchtungseinrichtung (1) zur Einspeisung von Licht und dem zweiten Lichtleiter (20) wenigstens eine zweite Lichtquelle (21) der Kraftfahrzeugbeleuchtungseinrichtung (1) zur Einspeisung von Licht zugeordnet ist und zwischen den Lichtleitern (10, 20) wenigstens ein rippenartiges, lichtleitendes Element (30) angeordnet ist, welches schräg zu den Lichteinkoppelflächen (LE1, LE2) verläuft und durch welches Licht von einem Lichtleiter (10 oder 20) in den anderen Lichtleiter (20 oder 10) übertragen werden kann, wobei die Lichteinkoppelflächen (LE1 bzw. LE2) jeweils derart zu den Lichtaustrittsflächen (LA1 bzw. LA2) angeordnet sind, dass eine gedachte Flächennormale (N1 bzw. N2) auf einer Lichteinkoppelfläche (LE1 bzw. LE2) in die dieser (LE1 bzw. LE2) zugeordneten Lichtaustrittsfläche (LA1 bzw. LA2) fällt, und wobei die Lichteinkoppelflächen (LE1, LE2) parallel zueinander sind und, in Längsrichtung (L1) der Lichtleiter (10, 20) gesehen, das rippenartige Element (30) zu einer parallel zu den Lichteinkoppelflächen (LE1, LE2) verlaufenden, gedachten Ebene (E) in einem Winkel (a) geneigt ist, so dass das Licht der zweiten Lichtquelle (21) zumindest teilweise zur Lichtaustrittsfläche (LA1) des ersten Lichtleiters (10) gelangen kann, nicht jedoch das Licht der ersten Lichtquelle (11) zur Lichtaustrittsfläche (LA2) des zweiten Lichtleiters (20), **dadurch gekennzeichnet, dass** der erste Lichtleiter (10), in einer Draufsicht auf die Kraftfahrzeugbeleuchtungseinrichtung (1) gesehen, derart ausgebildet ist, dass er einen Bereich (B) zumindest teilweise umrandet, wobei der zweite Lichtleiter (20) außerhalb des Bereichs (B) angeordnet ist und wobei innerhalb des Bereichs (B) wenigstens eine weitere Lichtquelle (51) der Kraftfahrzeugbeleuchtungseinrichtung zur Erzeugung eines Abblend- und/oder eines Fernlichts angeordnet ist.

2. Kraftfahrzeugbeleuchtungseinrichtung (1) nach Anspruch 1, **dadurch gekennzeichnet, dass** die Lichtleiter (10, 20) über das optische Element (30) einstückig miteinander verbunden sind.

3. Kraftfahrzeugbeleuchtungseinrichtung (1.) nach einem der vorhergehenden Ansprüche, **dadurch gekennzeichnet, dass** der erste Lichtleiter (10) als länglicher (L1) Körper ausgebildet ist, der in einer Draufsicht auf die Kraftfahrzeugbeleuchtungseinrichtung (1) den Bereich (B) allseitig umrandet, wobei, in Längsrichtung (L1) des ersten Lichtleiters (10) gesehen, die Lichtaustrittsfläche (LA2) des zweiten Lichtleiters (20) zur Lichtaustrittsfläche (LA1) des ersten Lichtleiters (10) in einem Abstand (A) zurückversetzt ist.

4. Kraftfahrzeugbeleuchtungseinrichtung (1) nach einem der vorhergehenden Ansprüche, **dadurch gekennzeichnet, dass** das rippenartige Element (30), ausgehend vom ersten Lichtleiter (10), in Richtung der Lichteinkoppelfläche (LE1) des ersten Lichtleiters (10) geneigt (a) ist.

5. Kraftfahrzeugbeleuchtungseinrichtung (1) nach einem der vorhergehenden Ansprüche, **dadurch gekennzeichnet, dass** die erste Lichtquelle (11) zur Erzeugung eines Tagfahrlichts und die zweite Lichtquelle (21) zur Erzeugung eines Blinklichts dient.

6. Kraftfahrzeugbeleuchtungseinrichtung (1) nach einem der vorhergehenden Ansprüche, **dadurch gekennzeichnet, dass** die Lichteinkoppelflächen (LE1, LE2) mit einer die Lichtstrahlen kollimierenden Optik (12,22) und die Lichtaustrittsflächen (LA1, LA2) mit einer die Lichtstrahlen streuenden Optik (13,23) versehen sind.

7. Kraftfahrzeug (K), **gekennzeichnet durch** wenigstens eine Kraftfahrzeugbeleuchtungseinrichtung (1) nach einem der Ansprüche 1 bis 6.

## Claims

1. Motor vehicle illumination device (1) having at least one first light guide (10) with at least one light input coupling face (LE1) and at least one light exit face (LA1) assigned to the former, and at least one second light guide (20) with at least one light input coupling face (LE2) and at least one light exit face (LA2) assigned to the former, wherein the first light guide (10) is assigned at least one first light source (11) of the motor vehicle illumination device (1) for injecting light and the second light guide (20) is assigned at least one second light source (21) of the motor vehicle illumination device (1) for injecting light and at least one rib-type light-guiding element (30) that extends at an angle to the light input coupling faces (LE1, LE2) and through which light can be transmitted from one light guide (10 or 20) into the other light guide (20 or 10) is arranged between the light guides (10, 20), wherein the light input coupling faces (LE1 or LE2) are in each case arranged with respect to the light exit faces (LA1 or LA2) such that an imaginary surface normal (N1 or N2) on a light input coupling face (LE1 or LE2) strikes the light exit face (LA1 or LA2) that is assigned thereto, and wherein the light input coupling faces (LE1, LE2) are parallel to one another and, viewed in the longitudinal direction (L1) of the light guides (10, 20), the rib-type element (30) is inclined relative to an imaginary plane (E) extending parallel to the light input coupling faces (LE1, LE2) at an angle (α), with the result that at least some of the light of the second light source (21) can reach the light exit face (LA1) of the first light guide (10) but the light of the first light source (11) cannot reach the light exit face (LA2) of the second light guide (20), **characterized in that** the first light guide (10), viewed in a plan view of the motor vehicle illumination device (1), is embodied such that it at least partially surrounds a region (B), wherein the second light guide (20) is arranged outside the region (B) and wherein at least one further light guide (51) of the motor vehicle illumination device is arranged within the region (B) for generating a low beam and/or a high beam.

2. Motor vehicle illumination device (1) according to Claim 1, **characterized in that** the light guides (10, 20) are connected to one another in one piece via the optical element (30).

3. Motor vehicle illumination device (1) according to either of the preceding claims, **characterized in that** the first light guide (10) is embodied as an elongate (L1) body that, viewed in a plan view of the motor vehicle illumination device (1), surrounds the region (B) on all sides, wherein, viewed in the longitudinal direction (L1) of the first light guide (10), the light exit face (LA2) of the second light guide (20) is set back with respect to the light exit face (LA1) of the first light guide (10) by a distance (A).

4. Motor vehicle illumination device (1) according to one of the preceding claims, **characterized in that** the rib-type element (30) is inclined (α), proceeding from the first light guide (10), in the direction of the light input coupling face (LE1) of the first light guide (10).

5. Motor vehicle illumination device (1) according to one of the preceding claims, **characterized in that** the first light source (11) serves for generating a daytime running light and the second light source (21) serves for generating a flashing light.

6. Motor vehicle illumination device (1) according to one of the preceding claims, **characterized in that** the light input coupling faces (LE1, LE2) are provided with an optical unit (12, 22) that collimates the light rays and the light exit faces (LA1, LA2) are provided with an optical unit (13, 23) that scatters the light rays.

7. Motor vehicle (K), **characterized by** at least one motor vehicle illumination device (1) according to one of Claims 1 to 6.

## Revendications

1. Dispositif d'éclairage de véhicule automobile (1), qui possède au moins un premier guide de lumière (10) comprenant au moins une surface d'injection de lumière (LE1) et au moins une surface de sortie de lumière (LA1) associée à celle-ci et au moins un deuxième guide de lumière (20) comprenant au moins une surface d'injection de lumière (LE2) et au moins une surface de sortie de lumière (LA2) associée à celle-ci, au moins une première source de lumière (11) du dispositif d'éclairage de véhicule automobile (1) étant associée au premier guide de lumière (10) pour injecter de la lumière et au moins une deuxième source de lumière (21) du dispositif d'éclairage de véhicule automobile (1) au deuxième guide de lumière (20) pour injecter de la lumière et au moins un élément conducteur de lumière (30) en forme de nervure étant disposé entre les guides de lumière (10, 20), lequel suit un tracé oblique par rapport aux surfaces d'injection de lumière (LE1, LE2) et à travers lequel peut être transmise de la lumière d'un guide de lumière (10 ou 20) dans l'autre guide de lumière (20 ou 10), les surfaces d'injection de lumière (LE1 ou LE2) étant respectivement disposées par rapport aux surfaces de sortie de lumière (LA1 ou LA2) de telle sorte qu'une normale à la surface imaginaire (N1 ou N2) sur une surface d'injection de lumière (LE1 ou LE2) est incidente à la surface de sortie de lumière (LA1 ou LA2) associée à celle-ci (LE1 ou LE2), et les surfaces d'injection de lumière (LE1, LE2) étant parallèles l'une à l'autre et, vu dans la direction longitudinale (L1) des guides de lumière (10, 20), l'élément (30) en forme de nervure étant incliné selon un angle (α) par rapport à un plan imaginaire (E) qui suit un tracé parallèle aux surfaces d'injection de lumière (LE1, LE2) de telle sorte que la lumière de la deuxième source de lumière (21) peut parvenir au moins partiellement jusqu'à la surface de sortie de lumière (LA1) du premier guide de lumière (10), mais toutefois pas la lumière de la première source de lumière (11) jusqu'à la surface de sortie de lumière (LA2) du deuxième guide de lumière (20), **caractérisé en ce que** le premier guide de lumière (10), en vue de dessus sur le dispositif d'éclairage de véhicule automobile (1), est configuré de telle sorte qu'il entoure au moins partiellement une zone (B), le deuxième guide de lumière (20) étant disposé en-dehors de la zone (B) et au moins une autre source de lumière (51) du dispositif d'éclairage de véhicule automobile (1) étant disposée à l'intérieur de la zone (B) pour générer un feu de croisement et/ou de route.

2. Dispositif d'éclairage de véhicule automobile (1) selon la revendication 1, **caractérisé en ce que** les guides de lumière (10, 20) sont reliés entre eux d'un seul tenant par le biais de l'élément optique (30).

3. Dispositif d'éclairage de véhicule automobile (1) selon l'une des revendications précédentes, **caractérisé en ce que** le premier guide de lumière (10) est réalisé sous la forme d'un corps allongé (L1) qui, en vue de dessus sur le dispositif d'éclairage de véhicule automobile (1), entoure la zone (B) de tous les côtés, la surface de sortie de lumière (LA2) du deuxième guide de lumière (20), en vue dans la direction longitudinale (L1) du premier guide de lumière (10), étant décalée en arrière d'une distance (A) par rapport à la surface de sortie de lumière (LA1) du premier guide de lumière (10).

4. Dispositif d'éclairage de véhicule automobile (1) selon l'une des revendications précédentes, **caractérisé en ce que** l'élément (30) en forme de nervure, en partant du premier guide de lumière (10), est incliné (a) en direction de la surface d'injection de lumière (LE1) du premier guide de lumière (10).

5. Dispositif d'éclairage de véhicule automobile (1) selon l'une des revendications précédentes, **caractérisé en ce que** la première source de lumière (11) sert à générer une lumière de circulation de jour et la deuxième source de lumière (21) à générer un feu clignotant.

6. Dispositif d'éclairage de véhicule automobile (1) selon l'une des revendications précédentes, **caractérisé en ce que** les surfaces d'injection de lumière (LE1, LE2) sont munies d'une optique de collimation (12, 22) des rayons lumineux et les surfaces de sortie de lumière (LA1, LA2) d'une optique de diffusion (13, 23) des rayons lumineux.

7. Véhicule automobile (K), **caractérisé par** au moins un dispositif d'éclairage de véhicule automobile (1) selon l'une des revendications 1 à 6.
